# EUROPEAN PATENT SPECIFICATION

(11) **EP 4 597 357 B1**
(45) Date of publication and mention of the grant of the patent: **08.07.2026**
(21) Application number: 24155213.2
(22) Date of filing: 01.02.2024
(51) Int. Cl.: G06K 7/10, G06K 19/07

(54) **TAG WITH VIRTUAL MEMORY**
ETIKETT MIT VIRTUELLEM SPEICHER
ÉTIQUETTE À MÉMOIRE VIRTUELLE

(43) Date of publication of application: 06.08.2025
(73) Proprietor: Renesas Design Austria GmbH, 8041 Graz (AT)
(72) Inventor: Rabl, Clemens, 8041 Graz (AT)
(74) Representative: Schwarz & Partner Patentanwälte GmbH

(56) References cited:
- US-A1- 2022 173 772

## Description

### FIELD OF THE INVENTION

The present invention relates a pass-through device with a contactless RFID interface circuit, to communicate with an RFID device, and with a wired contact interface circuit, to communicate with an application device, to pass payload data through between the RFID device and the application device, which pass-through device comprises:
the contactless RFID interface circuit that exchanges payload data with the RFID device, located in the same magnetic field, using block-by-block read and write operations, which blocks comprise header information and the payload data;
the wired contact interface circuit with at least two contact pins for wires to connect the pass-through device with the application device, which wired contact interface circuit is built to enable write operations to the application device for payload data received with the contactless RFID interface circuit and is built to enable read operations from the application device for payload data to be transmitted with the contactless RFID interface circuit;
a volatile memory for temporary storing payload data and a non-volatile memory for storing capability information about memory size available in the pass-through device for storing payload data.

### BACKGROUND OF THE INVENTION

Integrated circuit NT3H2111_2211 of the company NXP is such a pass-through device, which is realized as an NFC tag in home-automation and consumer applications. This NFC tag in a pass-through mode enables to transmit payload data from an RFID device to a memory controller unit of an application device like a display device. Document EP 3 160 165 B1 discloses such an RFID device like a mobile phone with Near Field Communication (NFC) functionality. NFC technology has been developed by an industry consortium under the name of NFC Forum (http://www.nfc-forum.org/) and derives from RFID technology. NFC components may operate in a "Reader" mode, a "Card Emulation" mode and a "Device" mode as standardized in ISO 18.092. An NFC component emits via its Near Field Communication contactless interface magnetic fields, sends data by modulating the amplitude of the magnetic field, and receives data by load modulation and inductive coupling. In the emulation mode, described for instance in EP 1 327 222, the NFC component operates passively like a transponder to engage in a dialog with another reader and to be seen by the other reader as an RFID chip.

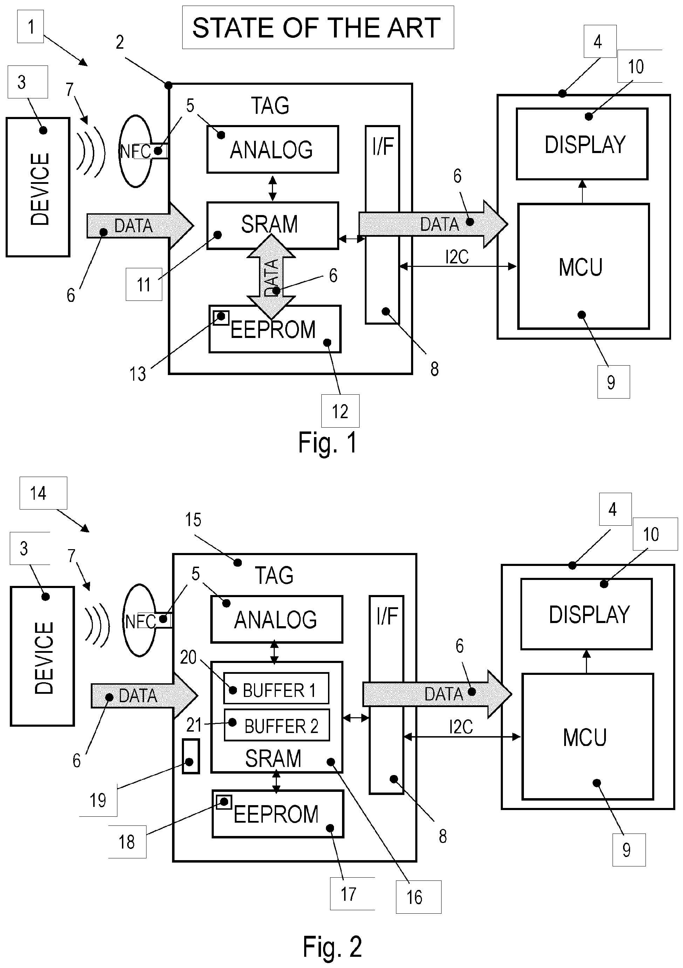

Figure 1 discloses a system 1 with such a pass-through device realized as NFC tag 2 and a mobile phone 3 and a display device 4 according to the state of the art. NFC tag 2 comprises a contactless RFID interface circuit 5 that exchanges payload data 6 with the mobile phone 3, which are both located in the same magnetic field 7 with a carrier frequency of 13.56 MHz generated by the mobile phone 3. The NFC Forum defined NDEF messages using block-by-block read and write operations to exchange payload data 6 between the mobile phone 3 and the NFC tag 2, which blocks comprise header information and the payload data 6.

NFC tag 2 furthermore comprises a wired contact interface circuit 8 with at least two contact pins for wires to connect the NFC tag 2 with the display device 4. Wired contact interface circuit 8 realizes an I2C data bus, known to a person skilled in the art, to communicate with the display device 4. Wired contact interface circuit 8 enables write operations to the display device 4 to transfer payload data 6 received with the contactless RFID interface circuit 5 and enables read operations from the display device 4 to transfer payload data 6 from the display device 4 to the NFC tag 2 and with the contactless RFID interface circuit 5 to the mobile phone 3.

Display device 4 comprises a micro-controller unit 9 that realizes the I2C data bus and controls a display 10 to visualize part or all of the payload data 6 received from the mobile phone 3. In this example of a pass-through application the display device 4 is mounted in a shop to display the price of a product on a shelf. A user may use mobile phone 3 to amend the price of the product and send this amended price as payload data 6 via the NFC tag 2 to display device 4. This enables an easy amendment of the price without the need to implement a wired I2C data bus in the mobile phone 3. Other pass-through applications are known for such pass-through devices to enable easy communication using the contactless RFID interface and in particular the contactless NFC interface. Other wired interfaces like SPI or UART or CAN protocol known to a person skilled in the art could be used as well.

NFC tag 2 furthermore comprises a volatile memory realized as SRAM 11 for temporary storing payload data 6 received via the contactless RFID interface circuit 5 or the wired contact interface circuit 8. Furthermore, a non-volatile memory realized as EEPROM 12 is used for permanently storing payload data 6 as SRAM 11 does not comprise enough memory space to store all payload data 6 of the pass-through application and as this permanent storage of payload data 6 enables to timewise decouple the transfer processes from the mobile phone 3 to the NFC tag 2 and from the NFC tag 2 to the display device 4.

EEPROM 12 furthermore is used to store a capability information 13, which indicates the memory size in the EEPROM 12 available in the NFC tag 2 for storing payload data 6. Different types of NFC tags 2 comprise different memory sizes of the EEPROM 12, which enables different pass-through applications with different storage needs for payload data 6. If a user initiates at mobile phone 3 a pass-through application with NFC tag 2 in the same magnetic field 7, then mobile phone 3 in a first step sends a read request to NFC tag 2 to read the capability information 13 stored in EEPROM 12. Only if this capability information 13 received at mobile phone 3 indicates that the memory size in the EEPROM 12 is large enough to store all blocks with payload data 6 for the block-by-block read and write operations needed for the pass-through application, then mobile phone 3 processes the requested pass-through application. In case the memory size in the EEPROM 12 is not large enough to store all blocks with payload data 6 needed for the pass-through application, then mobile phone 3 will display an information for the user that the selected pass-through application is not possible.

Drawback of this known pass-through devices is that the limitation of the memory space in the non-volatile memory, which is linked to the price and technical complexity of the pass-through devices, limits the possibility of pass-through applications.

US2022/173772 A1 describes an apparatus that includes a contactless transponder with a contactless interface and a wired interface, wherein the contactless transponder is configured to communicate with a contactless reader according to a contactless protocol through the contactless interface, wherein the apparatus further includes a wired communication bus connected to the wired interface and at least one module connected to the bus, wherein the transponder is configured so that the reader is a master on the bus when the reader and the transponder communicate.

### SUMMARY OF THE INVENTION

The objective of this invention is to provide a pass-through device and system of a pass-through device with an RFID device and an application device and a method processed by a pass-through device with improved use of the limited memory space in the non-volatile memory and improved flexibility in order to use the pass-through device for a broader range of pass-through applications. This object is achieved with a pass-through device according to claim 1 and a system according to claim 5 and method according to claim 8. The inventive pass-through device comprises a buffer management circuit to manage read and write operations of payload data into at least a first and a second buffer with a block of memory space defined in the volatile memory. The buffer management circuit is built to write payload data received from the contactless RFID interface circuit into the second buffer while payload data stored in the first buffer are read from the first buffer and transmitted with the wired contact interface circuit. The buffer management circuit enables a direct transfer of payload data received from the contactless RFID interface with a short temporary storage in the buffers in the volatile memory via the wired contact interface to the application device. There is no need to reserve memory space in the non-volatile memory of the pass-through device, what reduces the costs and complexity of the pass-through device.

In a preferred embodiment, the data transfer rate via the wired communication to the application device is higher than the data transfer rate enabled by the contactless RFID interface circuit from the RFID device. This enables a transfer of any amount of payload data from the RFID device to the application device without any relevant delay and provides high flexibility to use any type of inventive pass-through device for all kind of pass-through applications. This feature is implemented in the well-established environment of the NFC Forum specifications and NDEF messages by enabling the pass-through device to answer a read request from the RFID device to read the capability information with capability information indicating a memory size larger than the actual available memory size in the non-volatile memory.

In further preferred embodiments the buffer management circuit is built to manage a third buffer or even more in buffers organized memory space in the volatile memory to buffer a higher amount of payload in time periods where the wired contact interface suffers form a temporary delay. In other embodiments payload data received via the wired contact interface from the application device has to be buffered for the transfer of these payload data via the contactless RFID interface to the RFID device. For this embodiment it is advantageous to add more buffers in the volatile memory, if the data transfer rate of the wired contact interface is faster than the data transfer rate of the contactless RFID interface.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows a system of an RFID device and an application device and a pass-through device according to the state of the art.
Figure 2 shows a system of an RFID device and an application device and a pass-through device according to the invention.
Figure 3 shows a method of a write procedure to transfer payload data from the RFID device to the application device of figure 2 using a virtual NDEF memory with a first buffer and a second buffer in non-volatile memory of the pass-through device.

### DETAILED DESCRIPTION OF EMBODIMENTS

Figure 1 shows a system 1 of an RFID device and an application device and a pass-through device according to the state of the art as explained above. Figure 2 shows a system 14 that comprises an RFID device, realized as mobile phone 3, and comprises an application device, realized as display device 4, as explained based on figure 1. System 14 furthermore comprises an inventive pass-through device, realized as NFC tag 15 according to the invention. Those blocks of the system 14 that are identical to blocks in the state-of-the-art system 1 are marked with the same reference numbers in the figures.

NFC tag 15 comprises a contactless RFID interface circuit 5 that exchanges payload data 6 with the mobile phone 3, which are both located in the same magnetic field 7 with a carrier frequency of 13.56 MHz generated by mobile phone 3. Other contactless interfaces like Bluetooth ^{®} could be used as well. The NFC Forum defined NDEF messages using block-by-block read and write operations to exchange payload data 6 between mobile phone 3 and NFC tag 15, which blocks comprise header information and the payload data 6.

NFC tag 15 furthermore comprises a wired contact interface circuit 8 with at least two contact pins for wires to connect the NFC tag 15 with the display device 4. Wired contact interface circuit 8 realizes an I2C data bus, known to a person skilled in the art, to communicate with the display device 4. Wired contact interface circuit 8 enables write operations to the display device 4 to transfer payload data 6 received with the contactless RFID interface circuit 5 and enables read operations from the display device 4 to transfer payload data 6 from the display device 4 to the NFC tag 15 and with the contactless RFID interface circuit 5 to the mobile phone 3.

Display device 4 comprises a micro-controller unit 9 that realizes the I2C data bus and controls a display 10 to display part or all of the payload data 6 received from the mobile phone 3. In this example of a pass-through application the display device 4 is mounted in a shop to display the price of a product on a shelf. A user may use mobile phone 3 to amend the price of the product and send this amended price as payload data 6 via the NFC tag 15 to display device 4 just by holding the mobile phone 3 close to NFC tag 15. This enables an easy amendment of the price without the need to implement a wired I2C data bus in the mobile phone 3. Other pass-through applications are known for such pass-through devices to enable easy communication using the contactless RFID interface and in particular the contactless NFC interface. Other wired interfaces like SPI or UART or CAN protocol known to a person skilled in the art could be used as well for the transfer of payload data 6 between the NFC tag 15 and display device 4.

NFC tag 15 furthermore comprises a volatile memory realized as SRAM 16 for temporary storing or buffering payload data 6 received via the contactless RFID interface circuit 5 or the wired contact interface circuit 8. Furthermore, a non-volatile memory realized as EEPROM 17 is used to store a capability information 18. NFC Forum Specification *"NFC Data Exchange Format Technical Specification"* defines the capability information to indicate the memory size in the EEPROM 12 available in the state-of-the-art NFC tag 2 for storing payload data 6. Different types of NFC tags 2 comprise different memory sizes of the EEPROM 12, which enables different pass-through applications. If a user initiates mobile phone 3 for a pass-through application with NFC tag 2 in the same magnetic field, then mobile phone 3 in a first step sends a read request to NFC tag 2 to read the capability information 13 stored in EEPROM 12 to check if this pass-through application is possible with this NFC tag 2.

As the NFC tag 15 according to the invention is not limited by the memory size of EEPROM 17 to permanently store payload data 6, what will be explained below, the capability information 18 stored in the EEPROM 17 indicates a memory size larger than defined in the NFC Forum Specification, to indicate requesting mobile phone 3 that NFC tag 15 is able to handle all kind of pass-through applications, even with the need to transfer large amounts of payload data 6. This enables to use inventive NFC tag 15 flexible in a wide range of pass-through applications and reduces the need for all kind of different types of NFC tags 15 with different EEPROM 17 memory sizes.

To achieve this, NFC tag 15 comprises a buffer management circuit 19 to manage write operations of payload data 6 received from the contactless RFID interface circuit 5 into at least a first buffer 20 and a second buffer 21 in SRAM 16, which forms some kind of a virtual NDEF memory for pass-through applications. The abbreviation NDEF stands for NFC Data Exchange Format as defined by the NFC Forum. First buffer 20 and second buffer 21 may have any amount of memory size, but it is advantageous to define these buffers with the same amount of bit and/or byte and to adjust the number of bits/bytes of the buffer to the block size or a multiple of the block size of the block-by-block read and write operations for payload data 6. Buffer management circuit 19 is built to manage read operations of payload data 6 stored in the first buffer 20 and second buffer 21 to be transmitted with the wired contact interface circuit 8 to pass the payload data 6 through without storage of payload data 6 in EEPROM 17. This reduces the need of memory size of EEPROM 17 and reduces the number of write and read cycles from and to the EEPROM 17.

System 14 and NFC tag 15 are furthermore realized in a way that the wired contact interface circuit 8 enables a higher data transfer rate via the wired contact interface circuit 8 to the display device 4 than the data transfer rate enabled by the contactless RFID interface circuit 5 from mobile phone 3. In fact, wired I2C bus enables data transfer rates of up to 100kbit/s in standard mode and further modes data transfer rates of up to 400kbit/s or 1 Mbit/s or 3.4 Mbit/s, while contactless NFC interface only comprises a more limited data transfer rate. This ensures that all payload data 6 received from mobile phone 3 and written into first buffer 20 may be read out from first buffer 20 and transferred via I2C bus to display device 4, while at the same time further payload data 6 received from mobile phone 3 are written into second buffer 21 by buffer management circuit 19. This means that buffer management circuit 19 is built to write payload data 6 received from the contactless RFID interface circuit 5 into the second buffer 21 or first buffer 20, while the payload data 6 stored in the first buffer 20 or second buffer 21 are read from the first buffer 20 or second buffer 21 and transmitted with the wired contact interface circuit 8. This ensures a complete and secure data transfer of all payload data 6 in the direction from the mobile phone 3 via the NFC tag 15 to display device 4. As this is the main direction of payload data 6, namely amended price information, this data transfer can be done in only a few milliseconds what eases the use and security to transfer all payload data 6. To ensure save transfer of all payload data 6 in the other direction from display device 4 via NFC tag 15 to mobile phone 3, more buffers or buffers with more memory space may be realized in SRAM 16.

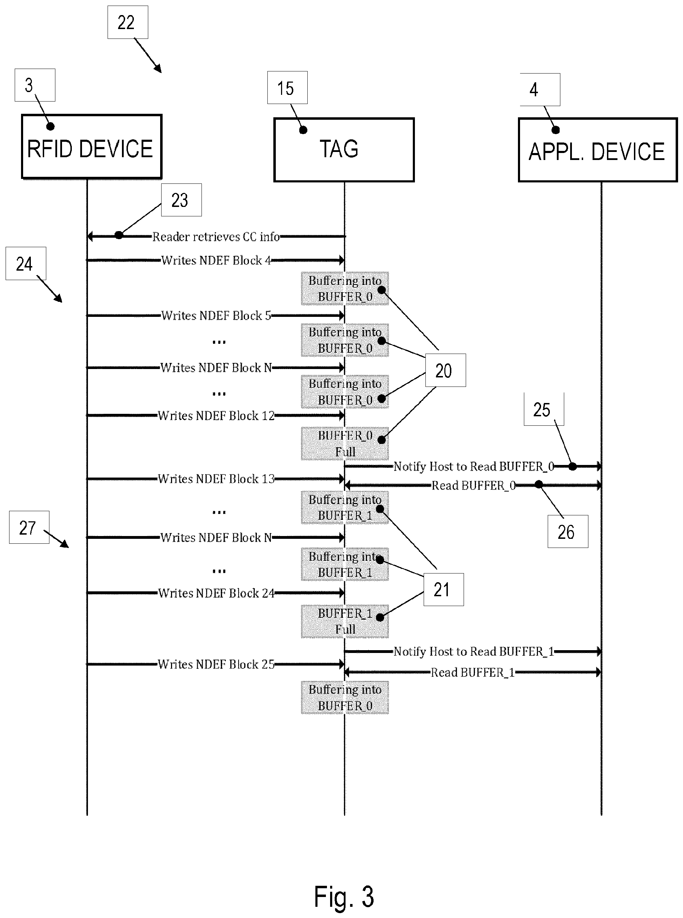

Figure 3 shows the method of a write procedure 22 to transfer payload data 6 from the mobile phone 3 to the display device 4 of figure 2 using the virtual NDEF memory with the first buffer 20 and the second buffer 21 in SRAM 16 of NFC tag 15. Mobile phone 3 is located close the NFC tag 15 and the application to start the pass-through of payload data 6 to display device 4 is activated in the mobile phone 3 by a user. Mobile phone 3 activates the generation of the magnetic field 7 and in a first step 23 mobile phone 3 requests and receives the capability information 18 stored in EEPROM 17 via contactless RFID interface circuit 5. As this capability information 18 ensures mobile phone 3 that NFC tag 15 will be able to handle the transfer of the payload data 6, mobile phone 3 in second step 24 starts the block-by-block transfer of payload data 6 of NDEF blocks 4 to 12 into the first buffer 20 until the first buffer 20 is full. In step 25 wired contact interface circuit 8 is used to notify micro-controller unit 9 to use the I2C bus to read payload data 6 from the first buffer 20. In step 26 micro-controller unit 9 reads these payload data 6 from the first buffer 20 and processes these payload data 6 to at the end of the write procedure 22 display the new price of the product in the shelf. At the same time or short afterwards in step 27 block-by-block transfer of payload data 6 of NDEF blocks 13 to 24 into the second buffer 21 proceeds until the second buffer 21 is full. This write procedure 22 from mobile phone 3 to display device 4 continues until all payload data 6 have been transferred and display device 4 displays the new price of the product on the shelf. With this virtual NDEF memory in SRAM 16 there is no need to store payload data 6 in EEPROM 17 what enables several advantages.

## Claims

1. Pass-through device (15) with a contactless RFID interface circuit (5), to communicate with an RFID device (3), and with a wired contact interface circuit (8), to communicate with an application device (4), to pass payload data (6) through between the RFID device (3) and the application device (4), which pass-through device (15) comprises:
the contactless RFID interface circuit (5) that exchanges payload data (6) with the RFID device (3), located in the same magnetic field (7), using block-by-block read and write operations, which blocks comprise header information and the payload data (6);
the wired contact interface circuit (8) with at least two contact pins for wires to connect the pass-through device (15) with the application device (4), which wired contact interface circuit (8) is built to enable write operations to the application device (4) for payload data (6) received with the contactless RFID interface circuit (5) and is built to enable read operations from the application device (4) for payload data (6) to be transmitted with the contactless RFID interface circuit (5);
a volatile memory (16) for temporary storing payload data (6) and a non-volatile memory (17);
a buffer management circuit (19) to manage write operations of payload data (6) received from the contactless RFID interface circuit (5) into at least a first buffer (20) and a second buffer (21) in the volatile memory (16) and to manage read operations of payload data (6) stored in the first buffer (20) and second buffer (21) to be transmitted with the wired contact interface circuit (8) to pass the payload data (6) through without storage of payload data (6) in the non-volatile memory (17),
**characterized in that** the non-volatile memory (17) is built to store capability information (18) about memory size available in the pass-through device (15) for storing payload data (6) and that the pass-through device (15) is built to receive a read request from the RFID device (3) to read the capability information (18) stored in the non-volatile memory (17) and is built to send the stored capability information (18) indicating a memory size larger than the available memory size in the non-volatile memory (17).

2. Pass-through device (15) according to claim 1, wherein the wired contact interface circuit (8) enables a higher data transfer rate via the wired communication to the application device (4) than the data transfer rate enabled by the contactless RFID interface circuit (5) from the RFID device (3).

3. Pass-through device (15) according to any of the claims 1 or 2, wherein buffer management circuit (19) is built to write payload data (6) received from the contactless RFID interface circuit (5) into the second buffer (21)/first buffer (20), while the payload data (6) stored in the first buffer (20)/second buffer (21) are read from the first buffer (20)/second buffer (21) and transmitted with the wired contact interface circuit (8).

4. Pass-through device according to any of the claims 1 to 3, wherein the buffer management circuit is built to manage write operations into and read operations from at least a third buffer.

5. System (14) that comprises an RFID device (3) and an application device (4) and a pass-through device (15) according to any of the claims 1 to 4, wherein the RFID device (3) emits the magnetic field of 13.56 MHz transmitter frequency and is built to communicate based of the Near Field Communications standard.

6. System (14) according to claim 5, wherein the application device (4) comprises a micro-controller circuit (9) with at least two contact pins for wires, which at least two wires of the system (14) connect the pass-through device (15) with the application device (4) to transfer payload data (6).

7. System (14) according to claim 5 or claim 6, wherein the application device (4) comprises a display to visualize payload data (6) passed through from the RFID device (3).

8. Method to be processed by a pass-through device (15) according to any of the claims 1 to 4 to pass through payload data (6) from the RFID device (3) to the application device (4) of the system (14) according to any of the claims 5 to 7, wherein the following steps are processed by the pass-through device (15):
• write payload data (6) received from the contactless RFID interface circuit (5) into the second buffer (21)/first buffer (20), while the payload data (6) stored in the first buffer (20)/second buffer (21) are read from the first buffer (20)/second buffer (21) and transmitted with the wired contact interface circuit (8);
• receive a read request from the RFID device (3) to read the capability information (18) stored in the non-volatile memory (17);
• send the stored capability information (18) indicating a memory size larger than the available memory size in the non-volatile memory (17).

## Patentansprüche

1. Durchgangsgerät (15) mit einer kontaktlosen RFID-Schnittstellenschaltung (5) zur Kommunikation mit einem RFID-Gerät (3) und mit einer drahtgebundenen Kontaktschnittstellenschaltung (8) zur Kommunikation mit einem Anwendungsgerät (4), um Nutzdaten (6) zwischen dem RFID-Gerät (3) und dem Anwendungsgerät (4) weiterzuleiten, wobei das Durchgangsgerät (15) umfasst:
die kontaktlose RFID-Schnittstellenschaltung (5), die Nutzdaten (6) mit dem RFID-Gerät (3), das sich im selben Magnetfeld (7) befindet, unter Verwendung von blockweisen Lese- und Schreibvorgängen austauscht, wobei diese Blöcke Header-Informationen und die Nutzdaten (6) umfassen;
die drahtgebundene Kontaktschnittstellenschaltung (8) mit mindestens zwei Kontaktstiften für Drähte, um das Durchgangsgerät (15) mit dem Anwendungsgerät (4) zu verbinden, wobei die drahtgebundene Kontaktschnittstellenschaltung (8) so ausgelegt ist, dass sie Schreibvorgänge an das Anwendungsgerät (4) für Nutzdaten (6) ermöglicht, die mit der kontaktlosen RFID-Schnittstellenschaltung (5) empfangen wurden, und so ausgelegt ist, dass sie Lesevorgänge vom Anwendungsgerät (4) für Nutzdaten (6) ermöglicht, die mit der kontaktlosen RFID-Schnittstellenschaltung (5) übertragen werden sollen;
einen flüchtigen Speicher (16) zum vorübergehenden Speichern von Nutzdaten (6) und einen nichtflüchtigen Speicher (17);
eine Pufferverwaltungsschaltung (19) zum Verwalten von Schreibvorgängen von Nutzdaten (6), die von der kontaktlosen RFID-Schnittstellenschaltung (5) empfangen werden, in mindestens einen ersten Puffer (20) und einen zweiten Puffer (21) im flüchtigen Speicher (16) sowie zur Verwaltung von Lesevorgängen von Nutzdaten (6), die im ersten Puffer (20) und im zweiten Puffer (21) gespeichert sind, um diese über die drahtgebundene Kontaktschnittstellenschaltung (8) zu übertragen, wobei die Nutzdaten (6) ohne Speicherung im nichtflüchtigen Speicher (17) weitergeleitet werden,
**dadurch gekennzeichnet, dass** der nichtflüchtige Speicher (17) so ausgebildet ist, dass er Kapazitätsinformationen (18) über die in dem Durchgangsgerät (15) zum Speichern von Nutzdaten (6) verfügbare Speichergröße speichert, und dass das Durchgangsgerät (15) so ausgebildet ist, dass es eine Leseanforderung von der RFID-Vorrichtung (3) zum Lesen der im nichtflüchtigen Speicher (17) gespeicherten Kapazitätsinformationen (18) empfängt und dazu ausgelegt ist, die gespeicherten Kapazitätsinformationen (18), die eine Speicherkapazität angeben, die größer ist als die verfügbare Speicherkapazität im nichtflüchtigen Speicher (17), zu senden.

2. Durchgangsgerät (15) nach Anspruch 1, wobei die drahtgebundene Kontaktschnittstellenschaltung (8) eine höhere Datenübertragungsrate über die drahtgebundene Kommunikation zum Anwendungsgerät (4) ermöglicht als die Datenübertragungsrate, die durch die kontaktlose RFID-Schnittstellenschaltung (5) vom RFID-Gerät (3) ermöglicht wird.

3. Durchgangsgerät (15) nach einem der Ansprüche 1 oder 2, wobei die Pufferverwaltungsschaltung (19) so ausgebildet ist, dass sie von der kontaktlosen RFID-Schnittstellenschaltung (5) empfangene Nutzdaten (6) in den zweiten Puffer (21)/ersten Puffer (20) schreibt, während die im ersten Puffer (20)/zweiten Puffer (21) gespeicherten Nutzdaten (6) aus dem ersten Puffer (20)/zweiten Puffer (21) ausgelesen und über die drahtgebundene Kontaktschnittstellenschaltung (8) übertragen werden.

4. Durchgangsgerät nach einem der Ansprüche 1 bis 3, wobei die Pufferverwaltungsschaltung so ausgelegt ist, dass sie Schreibvorgänge in und Lesevorgänge aus mindestens einem dritten Puffer verwaltet.

5. System (14), das eine RFID-Vorrichtung (3) und eine Anwendungsvorrichtung (4) sowie ein Durchgangsgerät (15) gemäß einem der Ansprüche 1 bis 4 umfasst, wobei die RFID-Vorrichtung (3) ein Magnetfeld mit einer Sendefrequenz von 13,56 MHz aussendet und so ausgelegt ist, dass sie auf der Grundlage des Near-Field-Communications-Standards kommuniziert.

6. System (14) nach Anspruch 5, wobei die Anwendungsvorrichtung (4) eine Mikrocontroller-Schaltung (9) mit mindestens zwei Kontaktstiften für Leitungen umfasst, wobei mindestens zwei Leitungen des Systems (14) das Durchgangsgerät (15) mit der Anwendungsvorrichtung (4) verbinden, um Nutzdaten (6) zu übertragen.

7. System (14) nach Anspruch 5 oder Anspruch 6, wobei das Anwendungsgerät (4) eine Anzeige umfasst, um von dem RFID-Gerät (3) weitergeleitete Nutzdaten (6) darzustellen.

8. Verfahren, das von einem Durchgangsgerät (15) gemäß einem der Ansprüche 1 bis 4 durchgeführt wird, um Nutzdaten (6) von der RFID-Vorrichtung (3) an die Anwendungsvorrichtung (4) des Systems (14) gemäß einem der Ansprüche 5 bis 7 weiterzuleiten, wobei die folgenden Schritte von dem Durchgangsgerät (15) durchgeführt werden:
• die von der kontaktlosen RFID-Schnittstellenschaltung (5) empfangenen Nutzdaten (6) in den zweiten Puffer (21)/ersten Puffer (20) schreiben, während die im ersten Puffer (20)/zweiten Puffer (21) gespeicherten Nutzdaten (6) aus dem ersten Puffer (20)/zweiten Puffer (21) ausgelesen und über die drahtgebundene Kontaktschnittstellenschaltung (8) übertragen werden;
• Empfangen einer Leseanforderung vom RFID-Gerät (3) zum Lesen der im nichtflüchtigen Speicher (17) gespeicherten Kapazitätsinformationen (18);
• Senden der gespeicherten Kapazitätsinformationen (18), die eine Speichergröße angeben, die größer ist als die verfügbare Speichergröße im nichtflüchtigen Speicher (17).

## Revendications

1. Dispositif de transit (15) comportant un circuit d'interface RFID sans contact (5) pour communiquer avec un dispositif RFID (3) et comportant un circuit d'interface à contact filaire (8) pour communiquer avec un dispositif d'application (4), afin de faire transiter des données utiles (6) entre le dispositif RFID (3) et le dispositif d'application (4), le dispositif de transit (15) comprenant:
le circuit d'interface RFID sans contact (5) qui échange des données utiles (6) avec le dispositif RFID (3), situé dans le même champ magnétique (7), par des opérations de lecture et d'écriture bloc par bloc, les blocs comprenant des informations d'en-tête et les données utiles (6);
le circuit d'interface à contact filaire (8) avec au moins deux broches de contact pour des fils pour connecter le dispositif de transit (15) au dispositif d'application (4), le circuit d'interface à contact filaire (8) étant conçu pour permettre des opérations d'écriture sur le dispositif d'application (4) pour des données utiles (6) reçues via le circuit d'interface RFID sans contact (5), et étant conçu pour permettre des opérations de lecture provenant du dispositif d'application (4) pour des données utiles (6) à transmettre via le circuit d'interface RFID sans contact (5);
une mémoire volatile (16) pour le stockage temporaire des données utiles (6), et une mémoire non volatile (17);
un circuit de gestion de tampon (19) pour gérer des opérations d'écriture des données utiles (6) reçues du circuit d'interface RFID sans contact (5) dans au moins un premier tampon (20) et un deuxième tampon (21) dans la mémoire volatile (16), et pour gérer des opérations de lecture des données utiles (6) stockées dans le premier tampon (20) et dans le deuxième tampon (21) en vue de leur transmission via le circuit d'interface à contact filaire (8), afin de faire transiter les données utiles (6) sans stocker les données utiles (6) dans la mémoire non volatile (17),
**caractérisé en ce que** la mémoire non volatile (17) est conçue pour stocker des informations de capacité (18) sur la taille de mémoire disponible dans le dispositif de transit (15) pour le stockage des données utiles (6), et **en ce que** le dispositif de transit (15) est conçu pour recevoir une requête de lecture du dispositif RFID (3) afin de lire les informations de capacité (18) stockées dans la mémoire non volatile (17), et est conçu pour transmettre les informations de capacité (18) stockées indiquant une taille de mémoire qui est plus grande que la taille de mémoire disponible dans la mémoire non volatile (17).

2. Dispositif de transit (15) selon la revendication 1, dans lequel le circuit d'interface à contact filaire (8) permet un débit de transfert de données via la communication filaire vers le dispositif d'application (4) qui est supérieur au débit de transfert de données permis par le circuit d'interface RFID sans contact (5) provenant du dispositif RFID (3).

3. Dispositif de transit (15) selon l'une quelconque des revendications 1 ou 2, dans lequel le circuit de gestion de tampon (19) est conçu pour écrire des données utiles (6) reçues du circuit d'interface RFID sans contact (5) dans le deuxième tampon (21)/le premier tampon (20), tandis que les données utiles (6) stockées dans le premier tampon (20)/le deuxième tampon (21) sont lues à partir du premier tampon (20)/du deuxième tampon (21) et sont transmises via le circuit d'interface à contact filaire (8).

4. Dispositif de transit selon l'une quelconque des revendications 1 à 3, dans lequel le circuit de gestion de tampon est conçu pour gérer des opérations d'écriture dans au moins un troisième tampon et des opérations de lecture provenant d'au moins un troisième tampon.

5. Système (14) comprenant un dispositif RFID (3) et un dispositif d'application (4) et un dispositif de transit (15) selon l'une quelconque des revendications 1 à 4, dans lequel le dispositif RFID (3) émet le champ magnétique à une fréquence d'émission de 13,56 MHz et est conçu pour communiquer selon la norme NFC (Near Field Communication, communication en champ proche).

6. Système (14) selon la revendication 5, dans lequel le dispositif d'application (4) comprend un circuit microcontrôleur (9) avec au moins deux broches de contact pour des fils, au moins deux fils du système (14) reliant le dispositif de transit (15) au dispositif d'application (4) pour le transfert des données utiles (6).

7. Système (14) selon la revendication 5 ou selon la revendication 6, dans lequel le dispositif d'application (4) comprend un écran pour visualiser les données utiles (6) transmises du dispositif RFID (3).

8. Procédé à traiter par un dispositif de transit (15) selon l'une quelconque des revendications 1 à 4, afin de faire transiter des données utiles (6) depuis le dispositif RFID (3) vers le dispositif d'application (4) du système (14) selon l'une quelconque des revendications 5 à 7, dans lequel les étapes suivantes sont traitées par le dispositif de transit (15):
• écrire des données utiles (6) reçues du circuit d'interface RFID sans contact (5) dans le deuxième tampon (21)/le premier tampon (20), tandis que les données utiles (6) stockées dans le premier tampon (20)/le deuxième tampon (21) sont lues à partir du premier tampon (20)/du deuxième tampon (21) et sont transmises via le circuit d'interface à contact filaire (8);
• recevoir une requête de lecture du dispositif RFID (3) afin de lire les informations de capacité (18) stockées dans la mémoire non volatile (17);
• transmettre les informations de capacité (18) stockées indiquant une taille de mémoire qui est plus grande que la taille de mémoire disponible dans la mémoire non volatile (17).
